# FASCICULE DE BREVET EUROPEEN

(11) **EP 4 294 677 B1**
(45) Date de publication et mention de la délivrance du brevet: **20.08.2025**
(21) Numéro de dépôt: 22705856.7
(22) Date de dépôt: 20.01.2022
(51) Int. Cl.: B60R 11/02, B60R 11/06

(54) **ÉLÉMENT DE FOND DE COFFRE DE VÉHICULE AUTOMOBILE**
BODENELEMENT FÜR DEN KOFFERRAUM EINES KRAFTFAHRZEUGS
FLOOR ELEMENT OF THE BOOT OF A MOTOR VEHICLE

(30) Priorité: 19.02.2021 FR 2101642
(43) Date de publication de la demande: 27.12.2023
(73) Titulaire: Stellantis Auto SAS, 78300 Poissy (FR)
(72) Inventeur: BERNARDINO, Pascal, 94350 VILLIERS SUR MARNE (FR); LORETTE, Frederic, 78960 VOISINS LE BRETONNEUX (FR); RIVIERRE, Laurent, 75015 PARIS (FR)
(74) Mandataire: BCIP
(86) Numéro de dépôt international: PCT/FR2022/050107
(87) Numéro de publication internationale: WO 2022/175612

(56) Documents cités:
- EP-A1- 1 084 942
- DE-A1- 102012 205 912
- DE-U1- 202014 104 961
- GB-A- 2 309 212
- JP-A- 2010 158 970
- US-A1- 2018 057 079

## Description

Le contexte technique de la présente invention est celui garnissage de coffre de véhicules automobiles et notamment des arrangements de fond de coffre destinés à supporter un tapis amovible de coffre de véhicule automobile. Plus particulièrement, l'invention a trait à un élément de fond de coffre de véhicule automobile.

Dans l'état de la technique, on connait des arrangements de fond de coffre de véhicules automobile comprenant un élément de fond de coffre formant un rangement sous-tapis, fermé par un bouchon de fermeture. Ces arrangements de fond de coffre sont destinés à supporter un tapis amovible de coffre de véhicule automobile. Autrement dit, ces arrangements de fond de coffre sont destinés à former un contre appui vertical supportant le tapis de coffre amovible de véhicule automobile.

Un inconvénient de ces arrangements de fond de coffre est qu'ils manquent à former une pente homogène garantissant un contre appui vertical optimal. En effet, si le bouchon de fermeture de l'élément de fond de coffre est mal orienté, la pente est alors non-homogène. Lorsque l'élément de fond de coffre et le bouchons de fermeture forment un contre appui vertical qui n'est pas optimal, le tapis de coffre amovible de véhicule automobile est alors mal positionné. Ceci nuit au volume du coffre et contrarie un positionnement des objets logés dans le coffre du véhicule automobile équipé dudit arrangement de coffre.

On connait par ailleurs des arrangements de fond de coffre de véhicules automobile ayant des éléments de fond de coffre configurés spécifiquement selon l'usage qui en sera fait et selon le type de véhicule automobile qu'ils équipent. Les bouchons de fermeture qui leurs sont associés sont également spécifiques. On connait des éléments de fond de coffre de véhicules automobile conçus pour loger une roue de dépannage de type « galette », plus petite que les autres roues équipant le véhicule automobile. Alternativement, on connait des éléments de fond de coffre de véhicules automobile conçus pour loger une roue dépannage de type « pleine grandeur », semblable aux autres roues du véhicule automobile. Alternativement encore, on connait des éléments de fond de coffre de véhicules automobile conçus pour loger un système audio.

Par exemple, les documents EP1084942, montrant le préambule de la revendication 1, et DE202014104961 présentent des véhicules comportant une zone creuse en fond de coffre pour recevoir une roue de secours.

L'inconvénient de ces arrangements de fond de coffre de véhicules automobile est qu'ils nécessitent différents types d'éléments de fond de coffre, chacun adapté à l'objet qu'il est destiné à loger, et collaborant avec un type de bouchon de fermetures spécifique à l'élément de fond de coffre considéré. Aussi, ces arrangements de fond de coffre de véhicules automobile nécessitent autant de chaînes de montage que de variants, ce qui multiplie le nombre de pièces à fabriquer. De tels arrangements de fond de coffre de véhicules automobile sont économiquement désavantageux.

La présente invention a pour objet de proposer un nouvel élément de fond de coffre de véhicule automobile afin de répondre au moins en grande partie aux problèmes précédents et de conduire en outre à d'autres avantages.

Un autre but de l'invention est de proposer un élément de fond de coffre de véhicule automobile simple, tant du point de vue de sa mise en œuvre, que du point de vue de sa fabrication.

Un autre but de l'invention est de proposer un élément de fond de coffre de véhicule automobile qui soit universel et configuré pour s'adapter à différents véhicules automobiles.

Un autre but de l'invention est de proposer un élément de fond de coffre de véhicule automobile configuré pour garantir la tenue sous charge d'un tapis de coffre amovible de véhicule automobile.

Un autre but de l'invention est de proposer un élément de fond de coffre de véhicule automobile qui soit compatible avec le fonctionnement d'un système audio.

Selon un premier aspect de l'invention, on atteint au moins l'un des objectifs précités avec un élément de fond de coffre de véhicule automobile avec les caractéristiques de la revendication 1, l'élément de fond de coffre comportant (i) un cadre extérieur délimitant latéralement et longitudinalement l'élément de fond de coffre, le cadre extérieur présentant dans une direction verticale une surface d'appui supérieure destinée à recevoir un élément de plancher de coffre et (ii) une ouverture centrale délimitée par une paroi cylindrique, l'ouverture centrale étant configurée pour y loger une roue de secours du véhicule automobile, caractérisé en ce que l'élément de fond de coffre comporte un organe d'indexation angulaire ayant la forme d'une encoche formée sur la paroi cylindrique et configuré pour permettre d'indexer angulairement un bouchon de fermeture de l'ouverture centrale, relativement à la direction verticale de l'élément de fond de coffre. L'encoche formant l'organe d'indexation correspond à une découpe de la paroi cylindrique de l'élément de fond de coffre conforme au premier aspect de l'invention. On peut généraliser à une partie femelle formée sur la paroi cylindrique de l'élément de fond de coffre selon l'invention, destinée à collaborer par engagement de formes complémentaires avec une partie mâle formée sur le bouchon de fermeture

Dans l'élément de fond de coffre selon l'invention, le cadre extérieur délimite l'élément de fond de coffre, latéralement et longitudinalement. Dans l'élément de fond de coffre selon l'invention, une direction longitudinale s'entend comme une direction destinée à s'étendre d'avant en arrière dans le véhicule automobile équipé dudit élément de fond de coffre. Une direction latérale s'étend de gauche à droite dans le véhicule automobile équipé dudit élément de fond de coffre. Dans l'élément de fond de coffre selon l'invention, la direction latérale s'étend de façon sensiblement perpendiculaire à la direction longitudinale.

Dans l'élément de fond de coffre selon l'invention, la direction verticale, correspondant à une direction du bas vers le haut. On comprend que la surface d'appui supérieure du cadre extérieur de l'élément de fond de coffre selon l'invention est destinée à être orientée vers le haut dudit élément de fond de coffre.

Le cadre extérieur est un élément de structure de l'élément de fond de coffre selon l'invention. La surface d'appui supérieure du cadre extérieur est destinée à supporter un élément de plancher de coffre du véhicule automobile équipé de l'élément de fond de coffre selon l'invention. La surface d'appui supérieure du cadre extérieur configurée pour garantir une tenue sous charge dudit élément de plancher de coffre. L'élément de plancher de coffre est par exemple un tapis de coffre amovible de véhicule automobile.

Dans l'élément de fond de coffre selon l'invention, l'ouverture centrale délimitée par la paroi cylindrique est sensiblement centrée selon la direction latérale et selon la direction longitudinale par rapport au cadre extérieur de l'élément de fond de coffre selon l'invention.

Dans l'élément de fond de coffre selon l'invention, l'ouverture cylindrique est destinée à loger une roue de secours du véhicule automobile qu'il équipe. On comprend que l'ouverture cylindrique est adaptée pour loger une roue de secours de type « galette », plus petite que d'autres roues équipant le véhicule automobile, ou alternativement une roue de secours de type « pleine grandeur », semblable aux autres roues du véhicule automobile. Un tel élément de fond de coffre est standard pour différents types de roue de secours, ce qui permet une économie d'échelle dans une chaîne de fabrication d'un véhicule automobile équipé d'un tel élément de fond de coffre.

Conformément à l'invention, l'organe d'indexation angulaire est configuré pour permettre d'indexer angulairement un bouchon de fermeture de l'ouverture centrale, relativement à la direction verticale de l'élément de fond de coffre. L'organe d'indexation angulaire est configuré pour autoriser une seule et unique configuration angulaire d'assemblage du bouchon de fermeture sur l'élément de fond de coffre. L'organe d'indexation est destiné à coopérer avec un dispositif d'indexation angulaire du bouchon de fermeture par rengagement de formes complémentaires.

Ainsi, l'organe d'indexation angulaire est destiné à garantir une unique position relative entre l'élément de fond de coffre selon l'invention et le bouchon de fermeture de l'ouverture centrale. L'organe d'indexation angulaire indexant l'élément de fond de coffre selon l'invention et le bouchon de fermeture de l'ouverture centrale l'un par rapport à l'autre permet également de conserver un alignement relatif des deux pièces. Une unique position relative entre l'élément de fond de coffre selon l'invention et le bouchon de fermeture de l'ouverture centrale est essentiel pour soutenir uniformément l'élément de plancher de coffre.

En effet, l'élément de fond de coffre selon l'invention est configuré pour assurer une pente homogène et donc un contre appui vertical optimal dans le coffre du véhicule automobile qu'il équipe. Toute la surface d'appui supérieure du cadre extérieur de l'élément de fond de coffre soutien alors l'élément de plancher de coffre, renforçant sa robustesse. La qualité perçue par l'utilisateur s'en voit améliorée par rapport aux éléments de coffre existant.

L'invention conforme à son premier aspect permet ainsi avantageusement de garantir une tenue sous charge de l'élément de plancher de coffre. Elle permet également à un utilisateur de faciliter le positionnement relatif du bouchon de fermeture par rapport à l'élément de fond de coffre selon l'invention par la contrainte imposée par l'organe d'indexation angulaire.

L'élément de fond de coffre de véhicule automobile conforme au premier aspect de l'invention comprend avantageusement au moins un des perfectionnements ci-dessous, les caractéristiques techniques formant ces perfectionnements pouvant être prises seules ou en combinaison :
- l'organe d'indexation angulaire est situé au niveau de la surface d'appui supérieure du cadre extérieur de l'élément de fond de coffre selon l'invention ;
   . Selon une autre variante de réalisation, alternative ou complémentaire à la première variante de réalisation dans laquelle l'organe d'indexation est sous la forme d'une encoche, l'organe d'indexation angulaire prend la forme d'une rainure formée sur une face intérieure de la paroi cylindrique. La rainure formant l'organe d'indexation correspond à une entaille creuse, longue et étroite ménagée dans la paroi cylindrique de l'élément de fond de coffre conforme au premier aspect de l'invention. Selon une troisième variante de réalisation, alternative ou complémentaire à la première variante de réalisation et/ou à la deuxième variante de réalisation, l'organe d'indexation angulaire prend la forme d'une nervure formée sur une face intérieure de la paroi cylindrique. La nervure formant l'organe d'indexation prend par exemple la forme d'une portée cylindrique ou prismatique. On peut généraliser à une partie mâle en saillie de l'élément de fond de coffre selon l'invention, destinée à collaborer par engagement de formes complémentaires avec une partie femelle formée sur le bouchon de fermeture ;
- au niveau de l'organe d'indexation angulaire, la paroi cylindrique est située radialement à distance du cadre extérieur, relativement à la direction verticale, de sorte que l'élément de fond de coffre comporte un évidement périphérique à l'ouverture centrale délimité radialement par la paroi cylindrique et par le cadre extérieur. Un tel évidement périphérique permet de réduire la quantité de matière nécessaire à la fabrication de l'élément de fond de coffre conforme au premier aspect de l'invention. L'évidement périphérique permet avantageusement de loger des objets de petite dimension sous l'élément de plancher de coffre. Avantageusement, la paroi cylindrique est entièrement située radialement à distance du cadre extérieur, relativement à la direction verticale, l'évidement périphérique s'étendant tout autour de la paroi cylindrique ;
- une extrémité supérieure de la paroi cylindrique est coplanaire ou sensiblement coplanaire avec la surface d'appui supérieure. Préférentiellement, l'extrémité supérieure de la paroi cylindrique est coplanaire avec la surface d'appui supérieure du cadre extérieur, de sorte à ne former qu'une seule surface d'appui. En étant coplanaires, la surface d'appui supérieure du cadre extérieur de l'élément de fond de coffre selon l'invention et l'extrémité supérieure de la paroi cylindrique de l'élément de fond de coffre selon l'invention sont destinées à recevoir l'élément de plancher de coffre ;
- l'élément de fond de coffre comporte un logement destiné à loger un système audio, le logement étant formé entre une face inférieure de l'élément de fond de coffre et la surface d'appui supérieure, le logement étant délimité selon la direction verticale par une membrane. Dans l'élément de fond de coffre conforme au premier aspect de l'invention, la face inférieure est située à l'opposé de la surface d'appui supérieure, relativement à la direction verticale. Un tel élément de fond de coffre est configuré pour permettre de loger alternativement un système audio dans le logement ou une roue de secours du véhicule automobile, de type « galette » ou une roue de secours du véhicule automobile, de type « pleine grandeur » dans l'ouverture centrale. Un tel élément de fond de coffre permet une nouvelle économie d'échelle dans une chaîne de fabrication d'un véhicule automobile équipé d'un tel élément de fond de coffre ;
- le logement prend la forme d'une ouverture traversant de part en part l'élément de fond de coffre selon la direction latérale.
- selon la direction verticale, la membrane est située dans une position intermédiaire entre la surface d'appui supérieure et la face inférieure de l'élément de fond de coffre. Une telle membrane offre un espace de résonnance au système audio ;
- selon la direction verticale, la membrane est située à une hauteur comprise entre 30% et 70% d'une hauteur de l'élément de fond de coffre pris selon la direction verticale et au niveau du logement. Une telle membrane permet d'améliorer la rigidité de l'élément de fond de coffre. Notamment, une telle membrane permet d'améliorer la rigidité de de la paroi cylindrique de l'élément de fond de coffre en donnant une meilleure tenue radiale de ladite paroi cylindrique ;
- dans la direction longitudinale, la surface d'appui supérieure forme un angle non nul relativement à un plan horizontal. On entend par plan horizontal un plan s'étendant d'avant en arrière et perpendiculaire à une direction verticale s'étendant de bas en haut ;
- l'élément de fond de coffre est formé d'un matériau léger, tel que par exemple un polystyrène ou un polystyrène expansé ;
- l'élément de fond de coffre est préférentiellement obtenu par moulage. Ce procédé de formage industriel permet également d'obtenir à moindre coût un grand nombre d'unités d'élément de fond de coffre identiques, par répétition de l'utilisation d'un même moule.

Selon un deuxième aspect de l'invention, il est proposé un arrangement de coffre pour véhicule automobile avec les caractéristiques de la revendication 6, l'arrangement de coffre comportant (i) un élément de fond de coffre conforme au premier aspect de l'invention ou selon l'un quelconque de ses perfectionnements et (ii) un bouchon de fermeture logé dans l'ouverture centrale de l'élément de fond de coffre, le bouchon de fermeture comportant un dispositif d'indexation angulaire collaborant avec l'organe d'indexation angulaire de l'élément de fond de coffre par collaboration de formes complémentaires.

Dans l'arrangement de coffre conforme au deuxième aspect de l'invention, le bouchon de fermeture est destiné à fermer l'ouverture centrale de l'élément de fond de coffre.

Dans l'arrangement de coffre conforme au deuxième aspect de l'invention, l'organe d'indexation de l'élément de fond de coffre coopère avec le dispositif d'indexation angulaire du bouchon de fermeture par engagement de formes complémentaires. L'organe d'indexation de l'élément de fond de coffre est fixé au dispositif d'indexation angulaire du bouchon de fermeture par engagement de formes complémentaires entre une partie mâle et une partie femelle. Dans un premier exemple de réalisation, l'organe d'indexation de l'élément de fond de coffre forme la partie mâle et le dispositif d'indexation angulaire du bouchon de fermeture forme la partie femelle. Dans un deuxième exemple de réalisation alternatif au premier exemple de réalisation, l'organe d'indexation de l'élément de fond de coffre forme la partie femelle et le dispositif d'indexation angulaire du bouchon de fermeture forme la partie mâle.

Une coopération entre l'organe d'indexation de l'élément de fond de coffre et le dispositif d'indexation angulaire du bouchon de fermeture garantit une unique position relative entre l'élément de fond de coffre et le bouchon de fermeture. Une unique position relative entre l'élément de fond de coffre et le bouchon de fermeture est essentielle pour soutenir de façon optimale l'élément de plancher de coffre.

En effet, un tel arrangement de coffre assure une pente homogène lorsque le bouchon de fermeture obture l'ouverture centrale de l'élément de fond de coffre. L'arrangement de coffre conforme au deuxième aspect de l'invention offre un contre appui vertical optimal dans le coffre du véhicule automobile qu'il équipe. Toute la surface d'appui supérieure du cadre extérieur de l'élément de fond de coffre soutien alors l'élément de plancher de coffre, renforçant sa robustesse. La qualité perçue par l'utilisateur s'en voit améliorée par rapport aux arrangements de coffre conforme au deuxième aspect de l'invention existant.

L'invention conforme à son deuxième aspect permet ainsi avantageusement de garantir une tenue sous charge de l'arrangement de coffre.

L'arrangement de coffre pour véhicule automobile conforme au deuxième aspect de l'invention comprend avantageusement au moins un des perfectionnements ci-dessous, les caractéristiques techniques formant ces perfectionnements pouvant être prises seules ou en combinaison :
- le bouchon de fermeture a une conformation générale cylindrique de forme et dimension complémentaire à celles de l'ouverture centrale de l'élément de fond de coffre, le dispositif d'indexation angulaire comportant une portée prismatique qui s'étend radialement en saille par rapport à la conformation générale cylindrique. Un tel bouchon de fermeture permet d'obturer toute l'ouverture centrale de l'élément de fond de coffre. La portée prismatique en saillie forme une partie mâle destinée à coopérer avec l'organe d'indexation de l'élément de fond de coffre formant une partie femelle complémentaire. La portée prismatique s'étend radialement en saillie selon une direction perpendiculaire par rapport à une direction verticale du bouchon de fermeture, et radiale par rapport à la forme cylindrique / circulaire de la conformation générale du bouchon de fermeture ;
- lorsque l'organe d'indexation angulaire de l'élément de fond de coffre prend la forme d'une encoche formée sur la paroi cylindrique, la portée prismatique comporte une rainure configurée pour permettre un engagement de l'encoche de l'élément de fond de coffre. La rainure de la portée prismatique du dispositif d'indexation angulaire du bouchon de fermeture, engagée dans l'encoche de l'élément de fond de coffre, renforce le maintien en unique position angulaire du bouchon de fermeture par rapport à l'élément de fond de coffre.

Selon un troisième aspect de l'invention, il est proposé un véhicule automobile comportant un arrangement de coffre conforme au deuxième aspect de l'invention ou selon l'un quelconque de ses perfectionnements.

Dans le véhicule automobile conforme au troisième aspect de l'invention, le bouchon de fermeture de l'arrangement de coffre est destiné à fermer l'ouverture centrale de l'élément de fond de coffre.

Dans le véhicule automobile conforme au troisième aspect de l'invention, l'organe d'indexation de l'élément de fond de coffre coopère avec le dispositif d'indexation angulaire du bouchon de fermeture de l'arrangement de coffre par engagement de formes complémentaires. L'organe d'indexation de l'élément de fond de coffre est fixé au dispositif d'indexation angulaire du bouchon de fermeture de l'arrangement de coffre par engagement de formes complémentaires entre une partie mâle et une partie femelle. Dans un premier exemple de réalisation, l'organe d'indexation de l'élément de fond de coffre forme la partie mâle et le dispositif d'indexation angulaire du bouchon de fermeture de l'arrangement de coffre forme la partie femelle. Dans un deuxième exemple de réalisation alternatif au premier exemple de réalisation, l'organe d'indexation de l'élément de fond de coffre forme la partie femelle et le dispositif d'indexation angulaire du bouchon de fermeture de l'arrangement de coffre forme la partie mâle.

Dans le véhicule automobile conforme au troisième aspect de l'invention, une coopération entre l'organe d'indexation de l'élément de fond de coffre et le dispositif d'indexation angulaire du bouchon de fermeture de l'arrangement de coffre garantit une unique position relative entre l'élément de fond de coffre et le bouchon de fermeture. Une unique position relative entre l'élément de fond de coffre et le bouchon de fermeture est essentielle pour soutenir de façon optimale un élément de plancher de coffre du véhicule automobile conforme au troisième aspect de l'invention.

Dans le véhicule automobile conforme au troisième aspect de l'invention, une pente homogène est formée lorsque le bouchon de fermeture de l'arrangement de coffre obture l'ouverture centrale de l'élément de fond de coffre. Dans le véhicule automobile conforme au troisième aspect de l'invention, la pente homogène ainsi formée offre un contre appui vertical optimal dans le coffre dudit véhicule automobile. Toute la surface d'appui supérieure du cadre extérieur de l'élément de fond de coffre soutien alors l'élément de plancher de coffre du véhicule automobile conforme au troisième aspect de l'invention, garantissant une tenue sous charge de l'arrangement de coffre dans le véhicule automobile conforme au troisième aspect de l'invention.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue schématique d'un véhicule automobile conforme au troisième aspect de l'invention ;
[Fig.2] illustre une vue schématique d'un élément de fond de coffre conforme au premier aspect de l'invention, vu du dessus ;
[Fig.3] illustre une vue schématique de l'élément de fond de coffre conforme au premier aspect de l'invention illustré en FIGURE 2, vu du dessous ;
[Fig.4] illustre une vue en coupe de l'élément de fond de coffre conforme au premier aspect de l'invention illustré en FIGURE 2 ;
[Fig.5] illustre une vue schématique d'un arrangement de coffre conforme au deuxième aspect de l'invention, vu du dessus en perspective isométrique, dans un premier mode de réalisation ;
[Fig.6] illustre une vue schématique d'un bouchon de fermeture de l'arrangement de coffre conforme au deuxième aspect de l'invention illustré en FIGURE 5, vu du dessus ;
[Fig.7] illustre une vue schématique en coupe de l'arrangement de coffre conforme au deuxième aspect de l'invention illustré en FIGURE 5, mis en œuvre dans le véhicule automobile conforme au troisième aspect de l'invention, dans une première situation ;
[Fig.8] illustre une vue schématique de l'arrangement de coffre conforme au deuxième aspect de l'invention illustré en FIGURE 5, mis en œuvre dans le véhicule automobile conforme au troisième aspect de l'invention, dans une deuxième situation ;
[Fig.9] illustre une coupe de de l'arrangement de coffre conforme au deuxième aspect de l'invention illustré en FIGURE 8 ;
[Fig.10] illustre une vue schématique d'un arrangement de coffre conforme au deuxième aspect de l'invention, vu du dessus en perspective isométrique, dans un deuxième mode de réalisation ;
[Fig.11] illustre une vue schématique d'un bouchon de fermeture de l'arrangement de coffre conforme au deuxième aspect de l'invention illustré en FIGURE 10, vu du dessus ;
[Fig.12] illustre une vue schématique en coupe de l'arrangement de coffre conforme au deuxième aspect de l'invention illustré en FIGURE 10, mis en œuvre dans le véhicule automobile conforme au troisième aspect de l'invention ;
[Fig.13] illustre une vue schématique d'un arrangement de coffre conforme au deuxième aspect de l'invention, vu du dessus en perspective isométrique, dans un troisième mode de réalisation ;
[Fig.14] illustre une vue schématique d'un bouchon de fermeture de l'arrangement de coffre conforme au deuxième aspect de l'invention illustré en FIGURE 13, vu du dessus ;
[Fig.15] illustre une en coupe de l'arrangement de coffre conforme au deuxième aspect de l'invention illustré en FIGURE 13, mis en œuvre dans le véhicule automobile conforme au troisième aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

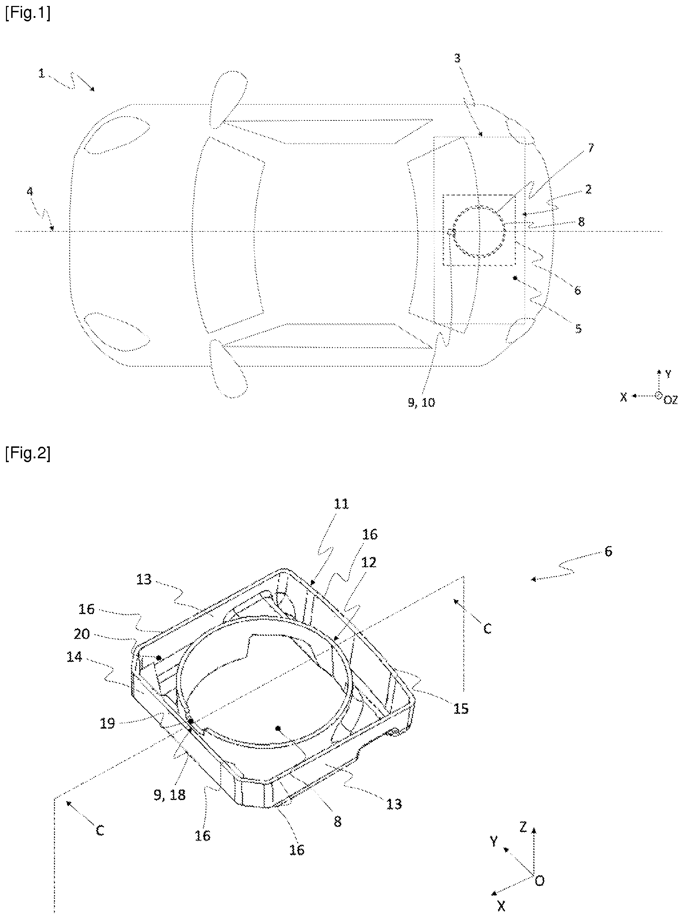

Dans les FIGURES 1 à 15, les orientations et directions sont définies comme suivant. Une direction longitudinale, correspondant à une direction d'arrière en avant, sera représentée par un axe OX. Une direction latérale correspondant à une direction de gauche à droite, sera représentée par un axe OY. Une direction verticale, correspondant à une direction du bas vers le haut, sera représentée par un axe OZ. Ces différents axes définissent un repère orthonormé OXYZ représenté dans les différentes figures. Dans de repère orthonormé, l'orientation « avant » sera définie par le sens positif de l'axe OX, l'orientation « arrière » étant définie par le sens négatif de ce même axe. L'orientation « dessus » ou « supérieur » sera définie par le sens positif de l'axe OZ, l'orientation « dessous » ou « inférieure » étant définie par le sens négatif de ce même axe.

La FIGURE 1 montre un véhicule automobile 1 conforme au troisième aspect de l'invention. Le véhicule automobile 1 conforme au troisième aspect de l'invention comporte un arrangement 2 de coffre 3 conforme au deuxième aspect de l'invention.

Dans le véhicule automobile 1 conforme au troisième aspect de l'invention illustré en FIGURE 1, l'arrangement 2 de coffre 3 est centré par rapport à un axe longitudinal médian 4 du véhicule automobile 1, l'axe longitudinal médian 4 s'étendant selon l'axe OX. Dans le véhicule automobile 1 conforme au troisième aspect de l'invention, l'arrangement 2 de coffre 3 supporte un élément 5 de plancher de coffre 3.

La FIGURE 1 montre que l'arrangement 2 de coffre 3 conforme au deuxième aspect de l'invention comporte un élément 6 de fond de coffre 3 conforme au premier aspect de l'invention et un bouchon 7 de fermeture logé dans une ouverture centrale 8 de l'élément 6 de fond de coffre 3. Le bouchon 7 de fermeture, qui a une conformation générale cylindrique de forme et dimension complémentaires à celles de l'ouverture centrale 8 de l'élément 6 de fond de coffre 3, ferme intégralement l'ouverture centrale 8 de l'élément 6 de fond de coffre 3 dans la FIGURE 1.

La FIGURE 1 montre que, dans l'arrangement 2 de coffre 3 conforme au deuxième aspect de l'invention, l'élément 6 de fond de coffre 3 conforme au premier aspect de l'invention comprend un organe d'indexation angulaire 9. Dans l'arrangement 2 de coffre 3, le bouchon 7 de fermeture comporte un dispositif d'indexation angulaire 10. Le dispositif d'indexation angulaire 10 du bouchon 7 de fermeture est formé à l'avant du bouchon 7 de fermeture. Le dispositif d'indexation angulaire 10 du bouchon 7 de fermeture est formé à l'arrière de l'organe d'indexation angulaire 9 de l'élément 6 de fond de coffre 3. Dans le véhicule automobile 1 conforme au troisième aspect de l'invention, le dispositif d'indexation angulaire 10 du bouchon 7 de fermeture et l'organe d'indexation angulaire 9 de l'élément 6 de fond de coffre 3 sont centrés sur l'axe longitudinal médian du véhicule automobile 1.

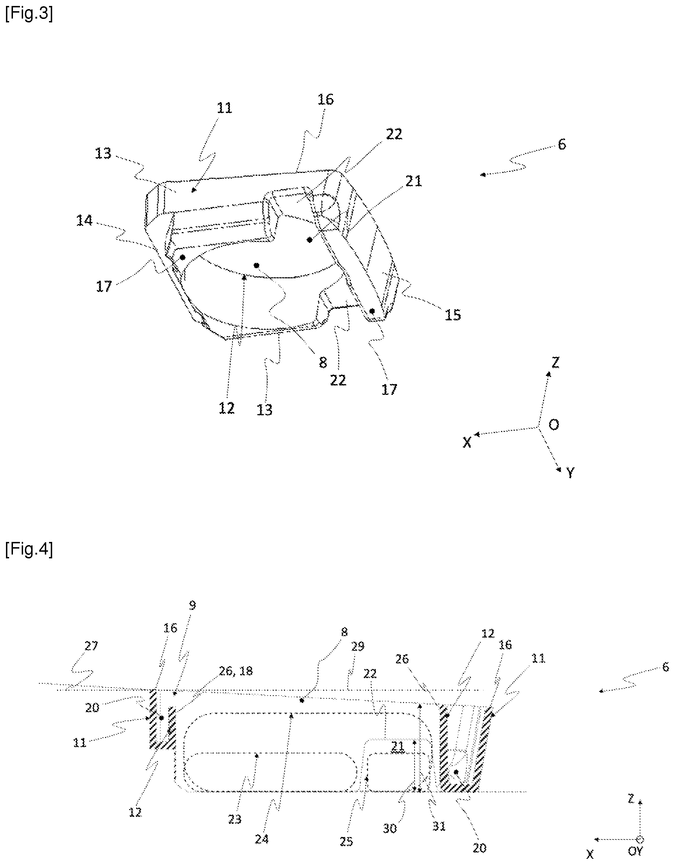

En référence aux FIGURES 2, 3 et 4, l'élément 6 de fond de coffre 3 conforme au premier aspect de l'invention est illustré. L'élément 6 de fond de coffre 3 est vu du dessus en FIGURE 2, vu du dessous en FIGURE 3 et vu en FIGURE 4 selon une longitudinale coupe CC représentée en FIGURE 2.

Les FIGURES 2, 3 et 4 montrent que l'élément 6 de fond de coffre 3 conforme au premier aspect de l'invention comporte un cadre extérieur 11, l'ouverture centrale 8 et l'organe d'indexation angulaire 9, l'organe d'indexation angulaire 9 étant visible en FIGURE 2 et 4. L'ouverture centrale 8 délimitée par une paroi cylindrique 12 de l'élément 6 de fond de coffre 3 selon l'invention.

Les FIGURES 2 et 3 montrent que le cadre extérieur 11 de l'élément 6 de fond de coffre 3 selon l'invention comprend deux parois latérales 13, chacune reliant une paroi avant 14 du cadre extérieur 11 à une paroi arrière 15 du cadre extérieur 11. Les parois latérales 13 du cadre extérieur 11 délimitent latéralement l'élément 6 de fond de coffre 3 selon l'invention. La paroi avant 14 du cadre extérieur 11 et la paroi arrière 15 du cadre extérieur 11 délimitent longitudinalement l'élément 6 de fond de coffre 3.

La FIGURE 2 montre que le cadre extérieur 11 de l'élément 6 de fond de coffre 3 selon l'invention présente une surface d'appui supérieure 16 destinée à recevoir l'élément 5 de plancher de coffre 3. La surface d'appui supérieure 16 du cadre extérieur 11 de l'élément 6 de fond de coffre 3 selon l'invention s'étend au niveau des deux parois latérales 13, de la paroi avant 14 et de la paroi arrière 15 du cadre extérieur 11. La surface d'appui supérieure 16 du cadre extérieur 11 de l'élément 6 de fond de coffre 3 selon l'invention est opposée à une face inférieure 17 de l'élément 6 de fond de coffre 3, relativement à la direction verticale, orientée selon l'axe OZ. La face inférieure 17 de l'élément 6 de fond de coffre 3 est visible en FIGURE 3 et non en FIGURE 2, du fait de l'angle de vue.

La FIGURE 2 montre que l'organe d'indexation angulaire 9 de l'élément 6 de fond de coffre 3 selon l'invention prend la forme d'une encoche 18 formée sur la paroi cylindrique 12 de l'élément 6 de fond de coffre 3 selon l'invention à l'avant de l'élément 6 de fond de coffre 3. L'encoche 18 comprend une face d'engagement 19 destinée à collaborer avec le dispositif d'indexation angulaire 10 du bouchon 7 de fermeture. La face d'engagement 19 de l'encoche 18 formant l'organe d'indexation angulaire 9 de l'élément 6 de fond de coffre 3 selon l'invention s'étend sensiblement de façon parallèle, et en retrait selon la direction verticale, de la surface d'appui supérieure 16 du cadre extérieur 11 de l'élément 6 de fond de coffre 3 selon l'invention.

La FIGURE 2 montre l'élément 6 de fond de coffre 3 conforme au premier aspect de l'invention comprend un évidement périphérique 20 s'étendant tout autour de la paroi cylindrique 12. L'évidement périphérique 20 est délimité radialement par la paroi cylindrique 12 et par le cadre extérieur 11 de l'élément 6 de fond de coffre 3 selon l'invention. La FIGURE 4 montre notamment que, au niveau de l'organe d'indexation angulaire 9 de l'élément 6 de fond de coffre 3 selon l'invention, la paroi cylindrique 12 est située radialement à distance du cadre extérieur 11, relativement à la direction verticale orientée selon l'axe OZ.

La FIGURE 3 montre que l'élément 6 de fond de coffre 3 conforme au premier aspect de l'invention comprend un logement 21 destiné à loger un système audio, ici non représenté. Le logement 21 destiné à loger un système audio est formé entre la face inférieure 17 de l'élément 6 de fond de coffre 3 et la surface d'appui supérieure 16 du cadre extérieur 11 de l'élément 6 de fond de coffre 3 selon l'invention. Le logement 21 destiné à loger un système audio est délimité selon la direction verticale, orientée selon l'axe OZ, par une membrane 22. La membrane 22 est issue de matière avec l'élément 6 de fond de coffre 3 conforme au premier aspect de l'invention. La membrane 22 s'étend entre la paroi cylindrique 12 de l'élément 6 de fond de coffre 3 selon l'invention et le cadre extérieur 11 de l'élément 6 de fond de coffre 3 selon l'invention, de part et d'autre de ladite paroi cylindrique 12. Le logement 21 destiné à loger un système audio prend la forme d'une ouverture traversant de part en part l'élément 6 de fond de coffre 3 selon la direction latérale, orientée selon l'axe OY. Le logement 21 destiné à loger un système audio s'étend de l'une des deux parois latérales 13 à l'autre des deux parois latérales 13. Le logement 21 et l'ouverture centrale 8 de l'élément 6 de fond de coffre 3 selon l'invention se chevauchent et forment ensemble un volume continu.

La FIGURE 4 illustre en pointillé différentes pièces 23, 24, 25 pouvant être logées alternativement dans l'élément 6 de fond de coffre 3 conforme au premier aspect de l'invention. On comprend que l'élément 6 de fond de coffre 3 peut loger une roue de secours 23 du véhicule automobile 1 de type « galette » dans l'ouverture centrale 8 ou une roue de secours 24 du véhicule automobile 1 de type « pleine grandeur » dans l'ouverture centrale 8, ou un système audio 25 dans le logement 21. Ainsi et conformément à l'invention, un même élément 6 de fond de coffre 3 permet d'offrir différentes options pour loger roue de secours 23 du véhicule automobile 1 de type « galette » 23 ou une roue de secours 24 du véhicule automobile 1 de type « pleine grandeur » ou un système audio 25, ou aucune de ces pièces 23, 24, 25. Quel que soit la configuration choisie, l'élément 6 de fond de coffre 3 conforme au premier aspect de l'invention est universel et permet d'équiper sans distinction différents véhicules automobiles 1 conformes au troisième aspect de l'invention.

La FIGURE 4 montre que la paroi cylindrique 12 de l'élément 6 de fond de coffre 3 selon l'invention comprend une extrémité supérieure 26. L'extrémité supérieure 26 de la paroi cylindrique 12, prise à l'arrière de l'élément 6 de fond de coffre 3 selon l'invention, est coplanaire avec la surface d'appui supérieure 16 du cadre extérieur 11 de l'élément 6 de fond de coffre 3 selon l'invention de sorte à ne former qu'une seule surface d'appui. Dans la direction longitudinale, orientée selon l'axe OX, la surface d'appui supérieure 16 forme un angle 27 non nul relativement à un plan horizontal 29 perpendiculaire à l'axe OZ. L'extrémité supérieure 26 de la paroi cylindrique 12, prise à l'avant de l'élément 6 de fond de coffre 3 selon l'invention, est en retrait de la surface d'appui supérieure 16 du cadre extérieur 11 de l'élément 6 de fond de coffre 3 selon l'invention et forme l'encoche 18 de l'organe d'indexation angulaire 9.

La FIGURE 4 montre que selon la direction verticale orientée selon l'axe OZ, la membrane 22 délimitant le logement 21 du système audio 25 est située dans une position intermédiaire entre la surface d'appui supérieure 16 du cadre extérieur 11 de l'élément 6 de fond de coffre 3 selon l'invention et la face inférieure 17 de l'élément 6 de fond de coffre 3 conforme au premier aspect de l'invention. En l'espèce, la membrane 22 délimitant le logement 21 du système audio 25 est située à une hauteur 30 prise selon la direction verticale orientée selon l'axe OZ comprise entre 40% et 60% d'une hauteur 31 de l'élément 6 de fond de coffre 3 prise selon la direction verticale orientée selon l'axe OZ et au niveau du logement 21.

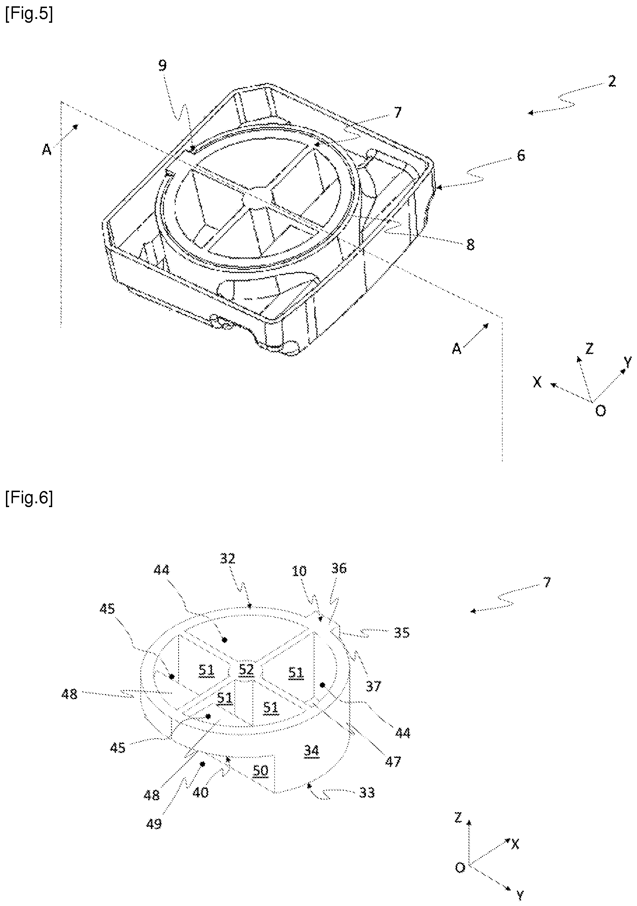

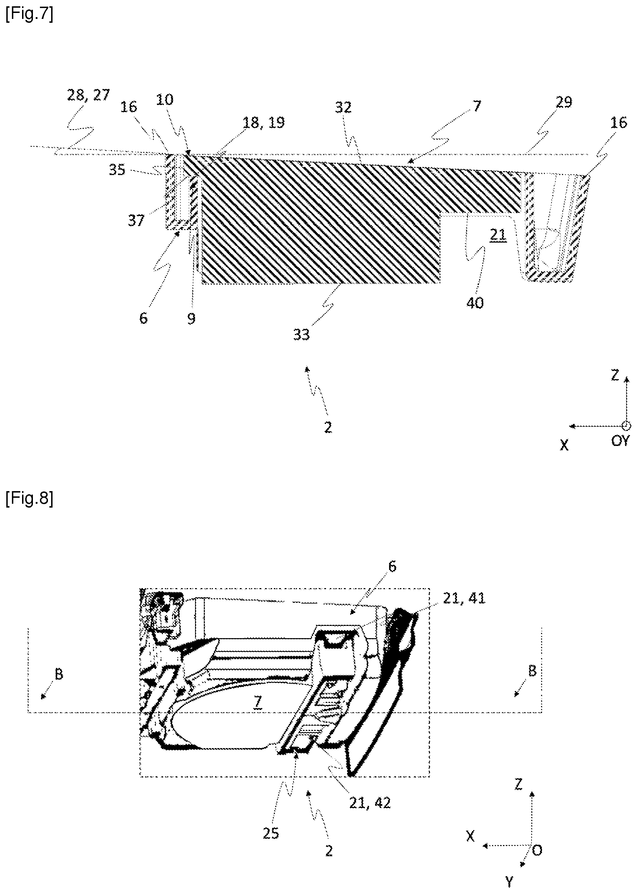

En référence aux FIGURES 5, 10 et 13, l'arrangement 2 de coffre 3 conforme au deuxième aspect de l'invention est illustré, vu du dessus en perspective isométrique, dans trois modes de réalisation distincts. L'arrangement 2 de coffre 3 comporte l'élément 6 de fond de coffre 3 conforme au premier aspect de l'invention et le bouchon 7 de fermeture. Le bouchon 7 de fermeture est logé dans l'ouverture centrale 8 de l'élément 6 de fond de coffre 3, le bouchon 7 de fermeture ayant une conformation générale cylindrique de forme et dimension complémentaire à celles de l'ouverture centrale 8 de l'élément 6 de fond de coffre 3. L'arrangement 2 de coffre 3 conforme au deuxième aspect de l'invention illustré aux FIGURES 5, 10 et 13 est représenté, respectivement aux FIGURES 7, 12 et 15, selon une coupe longitudinale AA. La coupe longitudinale AA passe par l'organe d'indexation angulaire 9 de l'élément 6 de fond de coffre 3 selon l'invention, comme montré aux FIGURES 5, 10 et 13.

Les FIGURES 6, 11 et 14 montrent le bouchon 7 de fermeture de l'arrangement 2 de coffre 3 conforme au deuxième aspect de l'invention. Le bouchon 7 de fermeture comprend une paroi supérieure d'appui 32 opposée à une base 33, relativement à la direction verticale, orientée selon l'axe OZ. La paroi supérieure d'appui 32 du bouchon 7 de fermeture et la base 33 du bouchon 7 de fermeture sont reliées par une paroi périphérique 34 du bouchon 7 de fermeture. La paroi périphérique 34 du bouchon 7 de fermeture est de forme cylindrique et est destinée à coopérer avec la paroi cylindrique 12 de l'élément fond de coffre 3 selon l'invention par engagement de formes complémentaires.

Les FIGURES 6, 11 et 14 montrent que le dispositif d'indexation angulaire 10 du bouchon 7 de fermeture comporte une portée prismatique 35 qui s'étend radialement en saille depuis la paroi périphérique 34 du bouchon 7 de fermeture vers l'avant du bouchon 7 de fermeture.

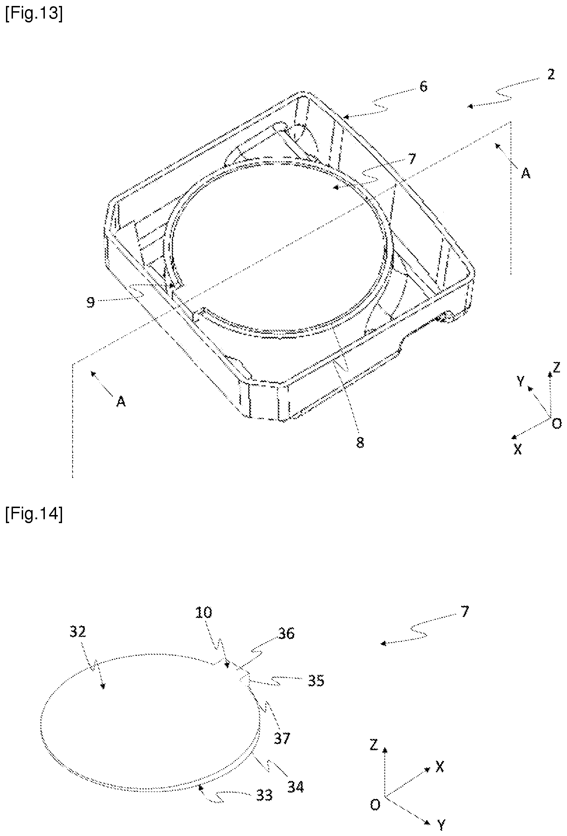

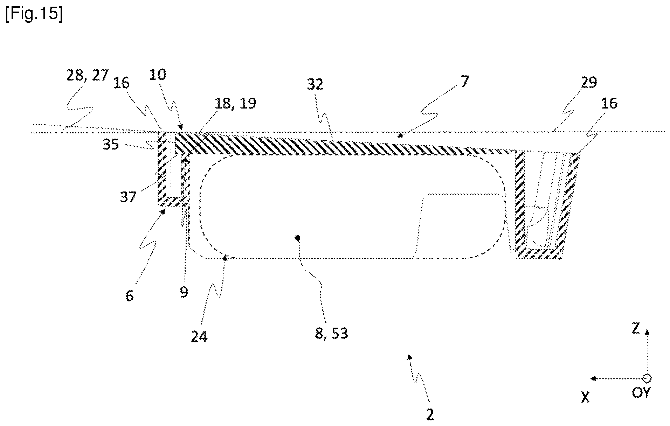

Les FIGURES 6 et 14 illustrent respectivement le bouchon 7 de fermeture de la première variante de réalisation et de la troisième variante de réalisation de l'arrangement 2 de coffre 3 conforme au deuxième aspect de l'invention. Les FIGURES 6 et 14 montrent une portée prismatique 35 du bouchon 7 de fermeture comportant une face supérieure 36 opposée à une face d'appui 37. La face supérieure 36 de la portée prismatique 35 est formée par extension de la paroi supérieure d'appui 32 du bouchon 7 de fermeture. La face d'appui 37 de la portée prismatique 35 est configurée pour collaborer avec l'encoche 18 de l'élément 6 de fond de coffre 3 conforme au premier aspect de l'invention. Les FIGURES 7 et 15 montrent la portée prismatique 35 du dispositif d'indexation angulaire 10 du bouchon 7 de fermeture engagée dans l'encoche 18 de l'élément 6 de fond de coffre 3, la portée prismatique 35 ayant une forme complémentaire et des dimensions complémentaires à l'encoche 18. La face d'appui 37 de la portée prismatique 35 du dispositif d'indexation angulaire 10 du bouchon 7 de fermeture collabore avec la face d'engagement 19 de l'encoche 18 formant l'organe d'indexation angulaire 9 de l'élément 6 de fond de coffre 3. Les FIGURES 7 et 15 montrent que la portée prismatique 35 a un profil longitudinal de forme rectangulaire. La face d'appui 37 de la portée prismatique 35 du dispositif d'indexation angulaire 10 du bouchon 7 de fermeture est en appui contre la face d'engagement 19 de l'encoche 18 formant l'organe d'indexation angulaire 9 de l'élément 6 de fond de coffre 3.

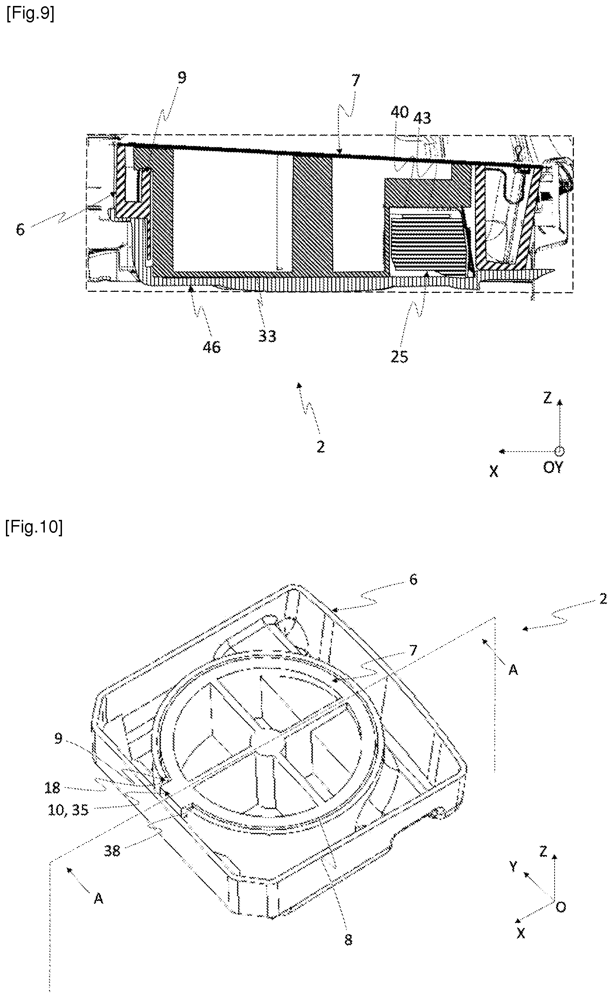

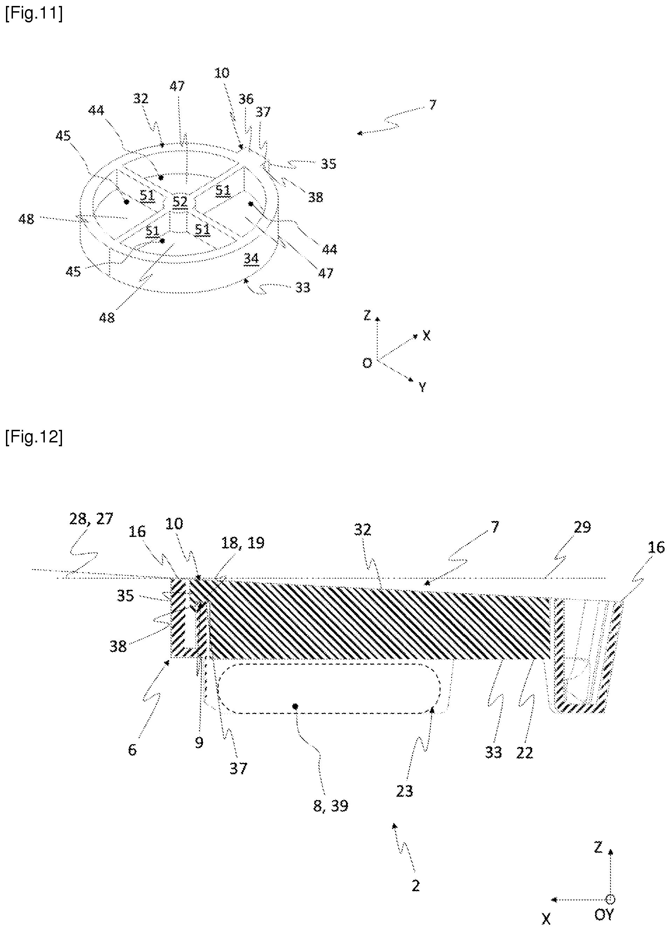

La FIGURE 11 montre le bouchon 7 de fermeture de la deuxième variante de réalisation de l'arrangement 2 de coffre 3 conforme au deuxième aspect de l'invention. La FIGURE 11 montre une portée prismatique 35 du bouchon 7 de fermeture comportant une rainure 38. Un fond de la rainure 38 forme la face d'appui 37 de portée prismatique 35 du dispositif d'indexation angulaire 10 du bouchon 7 de fermeture. La face supérieure 36 est opposée au fond de la rainure 38 formant la face d'appui 37 de portée prismatique 35 du dispositif d'indexation angulaire 10 du bouchon 7 de fermeture. La rainure 38 est ménagée dans la portée prismatique 35 à l'opposé de la paroi supérieure d'appui 32 du bouchon 7 de fermeture. La rainure 38 de la portée prismatique 35 est configurée pour s'engager dans l'encoche 18 de l'élément 6 de fond de coffre 3 conforme au premier aspect de l'invention de sorte que la face d'appui 37 de la portée prismatique 35 du dispositif d'indexation angulaire 10 du bouchon 7 de fermeture collabore avec la face d'engagement 19 de l'encoche 18 de l'élément 6 de fond de coffre 3. Les FIGURES 10 et 12 montrent la rainure 38 de la portée prismatique 35 du dispositif d'indexation angulaire 10 du bouchon 7 de fermeture engagée dans l'encoche 18 de l'élément 6 de fond de coffre 3, la rainure 38 ayant une forme complémentaire et des dimensions complémentaires à l'encoche 18. La FIGURE 12 montre que la portée prismatique 35 comportant la rainure 38 a un profil longitudinal en forme de L. Le fond de rainure 38 formant la face d'appui 37 de la portée prismatique 35 du dispositif d'indexation angulaire 10 du bouchon 7 de fermeture est en appui contre la face d'engagement 19 de l'encoche 18 formant l'organe d'indexation angulaire 9 de l'élément 6 de fond de coffre 3. La FIGURE 12 montre en outre que la base 33 du bouchon 7 de fermeture est également en appui contre la membrane 22. Ainsi, dans l'ouverture centrale 8 de l'élément 6 de fond de coffre 3 selon l'invention, un espace 39 de logement d'une roue de secours 23 du véhicule automobile 1 de type « galette » est formé.

Les FIGURES 7, 12, 15 montrent que, dans la direction longitudinale, orientée selon l'axe OX, la paroi supérieure d'appui 32 du bouchon 7 de fermeture forme un angle 28 non nul relativement au plan horizontal 29, et ce quel que soit la variante de réalisation de l'arrangement 2 de coffre 3 conforme au deuxième aspect de l'invention. Cet angle 28 non nul est égal à l'angle 27 formé par la surface d'appui supérieure 16 de l'élément 6 de fond de coffre 3 selon l'invention. La collaboration entre le dispositif d'indexation angulaire 10 du bouchon 7 de fermeture et l'organe d'indexation angulaire 9 de l'élément 6 de fond de coffre 3 conforme à l'invention permet d'indexer angulairement le bouchon 7 de fermeture dans l'ouverture centrale 8 de l'élément 6 de fond de coffre 3 selon l'invention, de sorte à ce que la surface d'appui supérieure 16 de l'élément 6 de fond de coffre 3 et la paroi supérieure d'appui 32 du bouchon 7 de fermeture soient coplanaires pour supporter ensemble l'élément 5 de plancher de coffre 3, non représenté.

Les FIGURES 6 et 7 montrent que le bouchon 7 de fermeture de la première variante de réalisation de l'arrangement 2 de coffre 3 conforme au deuxième aspect de l'invention comprend une paroi intermédiaire 40 s'étendant sensiblement horizontalement entre la paroi supérieure d'appui 32 du bouchon 7 de fermeture et la base 33 du bouchon 7 de fermeture. La FIGURE 7 montre que la paroi intermédiaire 40 du bouchon 7 de fermeture est destinée à surplomber le logement 21 alors que la base 33 du bouchon 7 de fermeture repose sur une structure du véhicule automobile 1, non représentée.

Les FIGURES 8 et 9 montrent la première variante de réalisation de réalisation de l'arrangement 2 de coffre 3 conforme au deuxième aspect de l'invention, illustrée en FIGURE 7, mise en situation. L'arrangement 2 de coffre 3 conforme au deuxième aspect de l'invention illustré en FIGURE 9 correspond à une coupe longitudinale BB visible en FIGURE 8, passant par l'organe d'indexation angulaire 9 de l'élément 6 de fond de coffre 3 selon l'invention, non visible en FIGURE 8.

Les FIGURES 8 et 9 illustrent le système audio 25 intégré à l'élément 6 de fond de coffre 3 conforme au premier aspect de l'invention, sous le bouchon 7 de fermeture. La FIGURE 8 montre que le système audio 25 s'étend transversalement dans le logement 21 de l'élément 6 de fond de coffre 3, depuis une première extrémité transversale 41 du logement 21 vers une deuxième extrémité transversale 42 du logement 21 opposée à la première extrémité transversale 41 du logement 21. La FIGURE 9 montre que la paroi intermédiaire 40 du bouchon 7 de fermeture est séparée du système audio 25 par un intervalle 43, le bouchon 7 de fermeture étant en appui contre une structure 46 du véhicule automobile 1 au niveau de la base 33 du bouchon 7 de fermeture.

La FIGURE 6 montre que le bouchon 7 de fermeture de la première variante de réalisation de réalisation de l'arrangement 2 de coffre 3 conforme au deuxième aspect de l'invention comprend deux chambres supérieures avant 44 et deux chambres supérieures arrière 45. Les deux chambres supérieures arrière 45 sont comprises entre la paroi supérieure d'appui 32 du bouchon 7 de fermeture et la paroi intermédiaire 40 du bouchon 7 de fermeture. Les deux chambres supérieures avant 44 sont comprises entre la paroi supérieure d'appui 32 du bouchon 7 de fermeture et la base 33 du bouchon 7 de fermeture. Les deux chambres supérieures avant 44 et les deux chambres supérieures arrière 45 sont ouvertes sur la paroi supérieure d'appui 32 du bouchon 7 de fermeture et comprennent un fond 47, 48. Les deux chambres supérieures avant 44 et les deux chambres supérieures arrière 45 forment un espace de rangement supplémentaire dans le bouchon 7 de fermeture. Le fond 48 des chambres supérieure arrière 45 est supérieur au fond 47 des chambres supérieures avant 44, relativement à l'axe OZ. Sous les deux chambres supérieures arrière 45, entre la paroi intermédiaire 40 et la base 33 du bouchon 7 de fermeture, le bouchon 7 de fermeture comprend un évidement 49 destiné à surplomber le logement 21. L'évidement 49 est délimité par la paroi intermédiaire 40 du bouchon 7 de fermeture et une face arrière 50 du bouchon 7 de fermeture, la face arrière 50 s'étendant perpendiculairement à la paroi intermédiaire 40 du bouchon 7 de fermeture et depuis ladite paroi intermédiaire 40 jusqu'à la base 33 du bouchon 7 de fermeture. La face arrière 50 du bouchon 7 de fermeture est délimitée par la paroi intermédiaire 40 du bouchon 7 de fermeture, la base 33 du bouchon 7 de fermeture et la paroi périphérique 34 du bouchon 7 de fermeture.

La FIGURE 11 montre que le bouchon 7 de fermeture de la deuxième variante de réalisation de réalisation de l'arrangement 2 de coffre 3 conforme au deuxième aspect de l'invention comprend deux chambres supérieures avant 44 et deux chambres supérieures arrière 45. Les deux chambres supérieures avant 44 et les deux chambres supérieures arrière 45 sont toutes quatre comprises entre la paroi supérieure d'appui 32 du bouchon 7 de fermeture et la base 33 du bouchon 7 de fermeture. Les deux chambres supérieures avant 44 et les deux chambres supérieures arrière 45 sont ouvertes sur la paroi supérieure d'appui 32 du bouchon 7 de fermeture et comprennent un fond 47, 48. Les deux chambres supérieures avant 44 et les deux chambres supérieures arrière 45 forment un espace de rangement supplémentaire dans le bouchon 7 de fermeture. Les fonds 47 des chambres supérieures avant 44 et les fonds 48 des chambres supérieures arrière 45 sont coplanaires et s'étendent sensiblement horizontalement.

Les FIGURES 6 et 11 montrent que les chambres supérieures avant 44 et les chambres supérieures arrière 45 sont séparées les unes des autres par des cloisons 51 de séparation des chambres 44, 45. Les cloisons 51 s'étendant radialement depuis la paroi périphérique 34 du bouchon 7 de fermeture vers un cylindre central vertical 52 du bouchon 7 de fermeture. Les cloisons 51 et la paroi périphérique 34 du bouchon 7 de fermeture délimitent la paroi supérieure d'appui 32 du bouchon 7 de fermeture.

La FIGURE 14 montre que le bouchon 7 de fermeture de la troisième variante de réalisation de l'arrangement 2 de coffre 3 conforme au deuxième aspect de l'invention comprend la paroi supérieure d'appui 32 formée par une surface pleine. La paroi supérieure d'appui 32 du bouchon 7 de fermeture s'étendant sur une surface pleine est délimitée par la paroi périphérique 34 du bouchon 7 de fermeture. La FIGURE 15 montre qu'un tel bouchon 7 de fermeture permet de fermer l'ouverture centrale 8 en libérant un espace 53 de logement d'une roue de secours 24 du véhicule automobile 1 de type « pleine grandeur ».

En synthèse, l'invention concerne un élément 6 de fond de coffre 3. L'élément 6 de fond de coffre 3 selon l'invention comporte un cadre extérieur 11 délimitant latéralement et longitudinalement l'élément 6 de fond de coffre 3, une ouverture centrale 8 délimitée par une paroi cylindrique 12 et un organe d'indexation angulaire 9 configuré pour permettre d'indexer angulairement un bouchon 7 de fermeture de l'ouverture centrale 8, relativement à la direction verticale de l'élément 6 de fond de coffre 3. Dans l'élément 6 de fond de coffre 3 selon l'invention, le cadre extérieur 11 présente dans une direction verticale une surface d'appui supérieure 16 destinée à recevoir un élément 5 de plancher de coffre 3. L'ouverture centrale 8 de l'élément 6 de fond de coffre 3 est configurée pour y loger alternativement une roue de secours 23, 24 du véhicule automobile 1 de type « galette » et de type « pleine grandeur ».

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Élément (6) de fond de coffre (3) de véhicule automobile (1), l'élément (6) de fond de coffre (3) comportant :
- un cadre extérieur (11) délimitant latéralement et longitudinalement l'élément (6) de fond de coffre (3), le cadre extérieur (11) présentant dans une direction verticale une surface d'appui supérieure (16) destinée à recevoir un élément (5) de plancher de coffre (3) ;
- une ouverture centrale (8) délimitée par une paroi cylindrique (12), l'ouverture centrale (8) étant configurée pour y loger une roue de secours (23, 24) du véhicule automobile (1) ;
**caractérisé en ce que** l'élément (6) de fond de coffre (3) comporte un organe d'indexation angulaire (9) prenant la forme d'une encoche (18) formée sur la paroi cylindrique (12) configuré pour permettre d'indexer angulairement un bouchon (7) de fermeture de l'ouverture centrale (8), relativement à la direction verticale de l'élément (6) de fond de coffre (3).

2. Élément (6) de fond de coffre (3) la revendication précédente, dans lequel, au niveau de l'organe d'indexation angulaire (9), la paroi cylindrique (12) est située radialement à distance du cadre extérieur (11), relativement à la direction verticale, de sorte que l'élément (6) de fond de coffre (3) comporte un évidement périphérique (20) à l'ouverture centrale (8) délimité radialement par la paroi cylindrique (12) et par le cadre extérieur (11).

3. Élément (6) de fond de coffre (3) selon l'une quelconque des revendications précédentes, dans lequel l'élément (6) de fond de coffre (3) comporte un logement (21) destiné à loger un système audio (25), le logement (21) étant formé entre une face inférieure (17) de l'élément (6) de fond de coffre (3) et la surface d'appui supérieure (16), le logement (21) étant délimité selon la direction verticale par une membrane (22).

4. Élément (6) de fond de coffre (3) selon la revendication précédente, dans lequel le logement (21) prend la forme d'une ouverture traversant de part en part l'élément (6) de fond de coffre (3) selon la direction latérale.

5. Élément (6) de fond de coffre (3) selon l'une quelconque des revendications 3 ou 4, dans lequel, selon la direction verticale, la membrane (22) est située à une hauteur (30) comprise entre 30% et 70% d'une hauteur (31) de l'élément (6) de fond de coffre (3) pris selon la direction verticale et au niveau du logement (21).

6. Arrangement (2) de coffre (3) pour véhicule automobile (1), l'arrangement (2) de coffre (3) comportant :
- un élément (6) de fond de coffre (3) selon l'une quelconque des revendications précédentes ;
- un bouchon (7) de fermeture logé dans l'ouverture centrale (8) de l'élément (6) de fond de coffre (3), le bouchon (7) de fermeture comportant un dispositif d'indexation angulaire (10) collaborant avec l'organe d'indexation angulaire (9) de l'élément (6) de fond de coffre (3) par collaboration de formes complémentaires.

7. Arrangement (2) de coffre (3) selon la revendication précédente, dans lequel le bouchon (7) de fermeture a une conformation générale cylindrique de forme et dimension complémentaire à celles de l'ouverture centrale (8) de l'élément (6) de fond de coffre (3), le dispositif d'indexation angulaire (10) comportant une portée prismatique (35) qui s'étend radialement en saille par rapport à la conformation générale cylindrique.

8. Arrangement (2) de coffre (3) selon la revendication précédente pris en combinaison avec l'élément (6) de fond de coffre (3) selon la revendication 2, dans lequel la portée prismatique (35) comporte une rainure (38) configurée pour permettre un engagement de l'encoche (18) de l'élément (6) de fond de coffre (3).

9. Véhicule automobile (1) comportant un arrangement (2) de coffre (3) selon l'une quelconque des revendications 6 à 8.

## Patentansprüche

1. Kfz-Kofferraumbodenelement (1)
wobei das Element (6) des Kofferraumbodens (3) Folgendes umfasst:
- einem äußeren Rahmen (11), der das Element seitlich und in Längsrichtung begrenzt (6) Kofferraumboden (3), wobei der Außenrahmen (11) in vertikaler Richtung eine obere Auflagefläche (16) zur Aufnahme eines Kofferraumbodenelements (5) aufweist;
- eine zentrale Öffnung (8), die durch eine zylindrische Wand (12) begrenzt ist,
wobei die zentrale Öffnung (8) zur Aufnahme eines Reserverads (23,24) ausgebildet ist, des Kraftfahrzeugs (1);
**dadurch gekennzeichnet, dass** das Element (6) des Kofferraumbodens (3) ein winkelförmiges Indexierungsorgan (9) in Form einer Kerbe (18) aufweist, die auf der Zylinderwand (12) zur Winkelindexierung eines Verschlussstopfen (7) für die zentrale Öffnung (8) relativ zu Vertikalrichtung des Kofferraum bodenelements (1).

2. Kofferraumbodenelement (6) nach dem vorhergehenden Anspruch, bei dem die zylindrische Wand (12) an dem winkelförmigen Indexierungselement (9) radial beabstandet von dem äußeren Rahmen angeordnet ist.
(11) relativ zur Vertikalrichtung, sodass das Bodenelement (6)
Der Kofferraum (3) weist an der zentralen Öffnung (8) eine umlaufende Ausnehmung (20) auf, die radial von der zylindrischen Wand (12) und dem Außenrahmen (11) begrenzt ist.

3. Kofferraumbodenelement (6) nach einem der vorhergehenden Ansprüche Vorhergehende Ansprüche, wobei das Kofferraum bodenelement (6)
eine Aufnahme (21) zur Aufnahme eines Audiosystems (25) aufweist, wobei die Aufnahme (21) zwischen einer Unterseite (17) des Kofferraumbodenteils (3) und der oberen Auflagefläche (16) ausgebildet ist, wobei die Aufnahme (21) in vertikaler Richtung durch eine Membran (22) begrenzt ist.

4. Kofferraumbodenelement (6) nach Patentanspruch 3
Vorgänger, bei dem die Aufnahme (21) die Form einer das Kofferraumbodenelement (6) in seitlicher Richtung durchsetzenden Öffnung annimmt.

5. Kofferraum bodenelement (6) nach einem der Ansprüche 3 oder 4, wobei in vertikaler Richtung die Membran (22) in einer Höhe (30) zwischen 30% und 70% einer Höhe (31) des Kofferraumbodenelements (6) in der Richtung angeordnet ist
Vertikal und auf Wohnebene (21).

6. Kofferraumanordnung (2) für ein Kraftfahrzeug (1), wobei die Kofferraumanordnung (2) folgendes umfasst:
- ein Kofferraumbodenelement (6) nach einem der vorhergehenden Ansprüche,
Ein Verschlussstopfen (7), der in der zentralen Öffnung (8) des Bauteils aufgenommen ist (6) eines Kofferraumbodens (3), wobei der Verschlussstopfen (7) eine Winkelindexiereinrichtung (10) aufweist, die mit dem Winkelindexierglied (9) des Kofferraumbodenteils (6) (3) formschlüssig zusammenwirkt.

7. Kofferraumanordnung (2) nach Patentanspruch 3
Vorgänger, bei dem der Verschlussstopfen (7) eine allgemeine zylindrische Form und Abmessung aufweist, die komplementär zu der der zentralen Öffnung (8) des Kofferraumbodenteils (3) ist, wobei die Winkelindexiereinrichtung (10) eine prismatische Auflagefläche (35) aufweist, die Erstreckt sich radial über die allgemeine Formgebung hinaus Zylinderförmig.

8. Kofferraumanordnung (2) nach dem vorhergehenden Anspruch in Kombination mit dem Kofferraumbodenteil (3) nach Anspruch 2, wobei die prismatische Auflagefläche (35) eine Nut (38) zum Eingreifen der Nut (18) das Kofferraumbodenelement (6).

9. Kraftfahrzeug (1) mit einer Kofferraumanordnung (2) nach einem der Ansprüche 6 bis 8.

## Claims

1. item (6) of Motor vehicle (1) trunk base (3) comprising:
an outer frame (11) laterally and longitudinally delimiting the item (6) trunk bottom (3), the outer frame (11) having in a vertical management an upper bearing surface (16) intended for a trunk floor (3) item (5);
a central opening (8) delimited by a cylindrical wall (12),
the central opening (8) being configured to house a spare wheel (23, 24) therein of the motor vehicle (1);
wherein the trunk bottom item (6) comprises an angular indexing member (9) taking the shape of a notch (18) formed on the cylindrical wall (12) configured to allow angular indexing of a stopper (7) for closing the central opening (8), relative to the Vertical management of the trunk bottom (3) item (6).

2. trunk bottom (3) Item (6) according to the previous claim, in which, on the level of the angular indexing member (9), the cylindrical wall (12) is located radially at a distance from the outer frame (11), relative to the vertical management, so that the bottom item (6) the trunk (3) comprises a peripheral recess (20) at the central opening (8) delimited radially by the cylindrical wall (12) and by the outer frame (11)

3. trunk bottom (3) Item (6) according to claim 1
of the previous claims, wherein the trunk bottom (3) item (6) comprises a housing (21) intended to house an audio system (25), the housing (21) being formed between a lower face (17) of the trunk bottom (3) item (6) and the upper bearing surface (16), the housing (21) being delimited along the vertical management by a membrane (22).

4. trunk bottom (3) Item (6) according to claim 3
previous, in which the housing (21) takes the form of an opening passing right through the trunk bottom (3) item (6) along the lateral management.

5. trunk bottom Item (6) according to either of Claims 3 and 4, in which, according to the vertical management, the membrane (22) is located at a height (30) comprised between 30% and 70% of a height (31) of the trunk bottom item (6) taken according to the management 5vertical and to the level of the housing (21).

6. A trunk (3) arrangement (2) for a motor vehicle (1), the trunk (3) arrangement (2) comprising:
- a trunk bottom (3) item (6) according to any one of the previous claims ; a closure cap (7) housed in the central opening (8) of the item (6) of the trunk bottom (3), the closure cap (7) comprising an angular indexing device (10) collaborating with the angular indexing member (9) of the trunk bottom (3) item (6) by collaboration of complementary shapes.

7. Trunk bottom (3) arrangement (2) according to claim 1 previous, in which the closure plug (7) has a generally cylindrical shape and size complementary to those of the central opening (8) of the trunk bottom (3) item (6), the angular indexing device (10) comprising a prismatic bearing surface (35) which
extends radially in projection by report to the general configuration cylindrical.

8. Trunk bottom (3) arrangement (2) according to the previous claim taken in combination with the box bottom item (6) (3) according to claim 2, in which the prismatic bearing surface (35) comprises a groove (38) configured to allow engagement of the notch (18) the trunk bottom (3) item (6).

9. Motor vehicle (1) comprising a trunk (3) arrangement (2) according to any one of Claims 6 to 8.
